# EUROPEAN PATENT SPECIFICATION

(11) **EP 1 363 343 B1**
(45) Date of publication and mention of the grant of the patent: **15.12.2004**
(21) Application number: 02405394.4
(22) Date of filing: 15.05.2002
(51) Int. Cl.: H01M 10/39, H01M 2/02

(54) **Low temperature sodium/metal chloride electrochemical battery unit**
Elektrochemische Natrium / Metallchlorid Niedertemperaturbatterie
Batterie à sodium et chlorure métallique à basse température

(43) Date of publication of application: 19.11.2003
(73) Proprietor: Mes-Dea S.A., 6855 Stabio (CH)
(72) Inventor: Dustmann, Cord-Henrich, 6839 Sagno (CH); Coetzer, Johan, Pretoria 0010 (ZA)
(74) Representative: Fiammenghi-Domenighetti, Delfina

(56) References cited:
- EP-A- 0 809 314
- DE-A- 3 939 845
- DE-A- 19 538 003
- US-A- 3 730 771
- US-A- 5 112 703
- US-A- 5 532 078
- US-A- 5 536 593
- US-A- 5 536 594

## Description

This invention relates to the field of units for electrochemical batteries and more particularly the sector relating to sodium/metal chloride units.

As is known to those skilled in the art, these units, of the rechargeable type, offer significant advantages in respect of the performance which can be obtained and the possibility of disposing of their component parts, but have a disadvantage deriving from the fact that they have to be kept at a temperature of between 200 and 350°C in order to ensure that they function satisfactorily.

The applicant is currently manufacturing a battery which uses units of this sodium/nickel chloride type and temperatures of the order mentioned above are necessary in order to maintain both the sodium salt NaAlCl₄, which is used for the transfer of Na ions from the anode towards the cathode while it is in operation, and the sodium anode itself in the liquid state. If the operating temperature is reduced, the resistivity of the aforesaid NaAlCl₄ salt in fact increases unacceptably, drastically reducing the circulation of ions and the current density within a unit, and as a consequence the quantity of electrical energy which can be obtained.

Maintaining the high temperatures indicated above brings many problems both of a practical and a functional nature associated with the overall performance which can be obtained, and in order to avoid all these problems the inventors of this invention have provided a solution which makes it possible to use a battery comprising sodium/metal chloride units at low temperatures, that is at the usual temperatures of the environment in which these operate, or at even lower temperatures.

In order to accomplish this the inventors have conceived a battery unit in which a sodium anode is separated from a porous sintered nickel or iron cathode by an electrolytic septum comprising a layer of β-alumina, which is of an unusually small thickness (approximately 0.1 mm) so that it has a resistance which is likewise small and which is already used in the state of the art for similar functions.

In order to be able to use such a thin sheet and provide it with the necessary mechanical strength the inventors have caused it to be supported partly, on the sintered nickel or iron cathode and partly, on the opposite side, that is on the anode side, by a rigid structure immersed in the sodium constituting the anode.

DE 195 38 003 and DE 39 39 845 teach sodium metal halide cells, which comprise an alumina separator, a NaAlCl₄ electrolyte and a casing with two flexible metal walls in parallel to the separator. US 3 730 771 describes a sodium metal halide cell with an alumina separator and an electrolyte in the form of a paste or jelly, obtained by means of a thickening agent, such as agar-agar or alginate. EP 0 809 314 discloses to cover the surface of a zinc or a lithium anode with an ion conducting film in order to avoid dendrite formation.

The invention provides a solution to the following problem:
the aforesaid sodium is in the solid state, in that the envisaged operating temperature is considerably below 90°C. While the unit is in operation and being discharged, if the sodium were to be in direct contact with the said sheet of β-alumina there would be intrusions of sodium into the structure of the latter which would rapidly bring about its corrosion and failure.

In order to avoid this the inventors have applied according to claim 1 an intermediate layer in the paraliquid or gel state to the side of the β-alumina septum facing the anode.

The cavities of the sintered nickel cathode, which has a spongy structure, are filled with the NaAlCl₄ salt, which has the well-known function of picking up and transferring the ions generated by the current drawn from the battery unit. In order to keep the aforesaid NaAlCl₄ salt liquid at ambient temperature or at even lower temperatures the inventors have provided that it should be mixed with a solvent which reduces its melting point, of the type fully described in United States Patent no. 5,567,546.

In order to construct the battery unit according to the invention and make it easy to connect it in series to other identical units so as to obtain a battery having the functional properties desired, the inventors have also conceived an innovative container comprising two opposing shells containing the anode and the cathode respectively separated by the aforesaid sheet of β-alumina, as will be illustrated in greater detail in the remainder of this description.

The subject matter of this invention therefore comprises an electrochemical battery unit as described in the appended Claim 1.

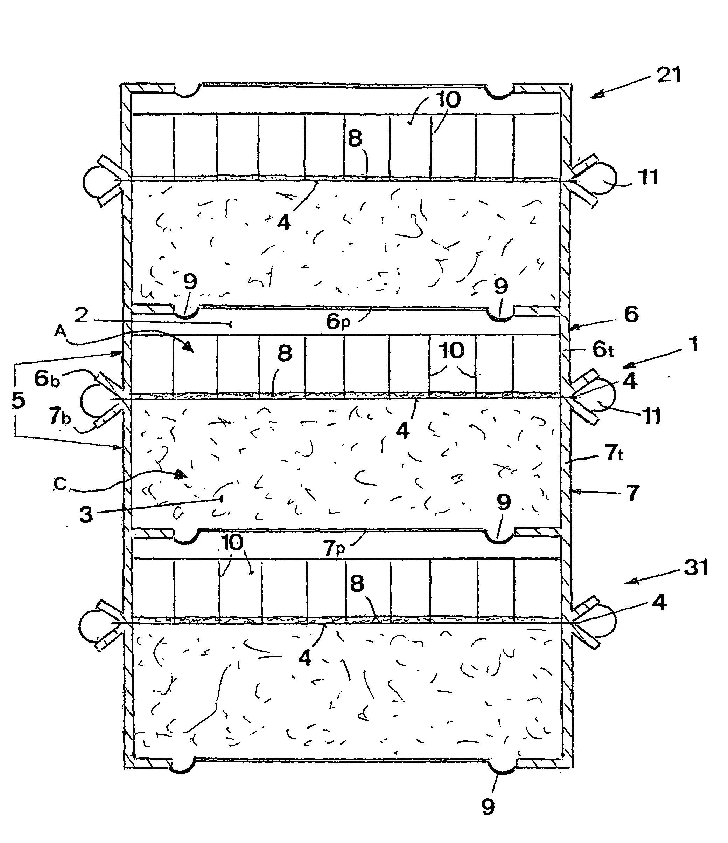

A more detailed description of a preferred embodiment of the battery unit according to the invention in which the metal chloride of the cathode is impregnated with sodium-aluminium chloride, NaAlCl₄, will now be provided. In providing this description reference will also be made to the appended figure, which shows a longitudinal cross-section through a unit according to the invention connected in series to two other identical units flanking it on opposite sides, and partly drawn using dashed lines in order that they may be better distinguished.

In the figure it will be seen that an electrochemical battery unit 1 constructed in accordance with the invention comprises two flanking sectors A, C containing an anode 2 of sodium in the solid state and a cathode 3 of porous sintered granular nickel or iron respectively, the cavities of which are filled with the said NaAlCl₄ salt mixed with the already mentioned solvent described in said patent US-A-5 567 546.

Anode 2 and cathode 3 are separated from each other by an electrolytic septum comprising a sheet 4 of β-alumina having a thickness of some 0.1 mm, against which these press on opposite sides in such a way as to keep it held in the desired position.

Sheet 4 and both sectors A, C are contained within a container 5 formed from two opposite shells 6, 7 with cross-sections of C-shape having an approximately mirror conformation, each having at least one wall 6p, 7p of metal which is elastic under flexion located parallel to electrolytic septum 4 and connected in a substantially perpendicular way to two end walls 6t, 7t forming part of said shells 6, 7.

Said metal walls 6p, 7p must be constructed in such a way that they are elastic under flexion in that by flexing they must be capable of allowing for the different changes in volume undergone by anode 2 and cathode 3 following displacement of part of the mass of materials making them up following the chemical reactions which occur within unit 1 during the stages of operation and recharging.

In order to accentuate the elasticity of metal walls 6p, 7p the inventors suggest that recesses 9 should be made in these by bending, which will make it possible through known factors to increase the amount of flexural yielding in the various parts of each wall.

As can be seen clearly in the figure, the electrolytic septum of β-alumina which separates anode 2 from cathode 3 is "clamped" between the free edges 6b, 7b of end walls 6t, 7t of said shells 6, 7. In order to avoid losses the inventors suggest that the junction zone between electrolytic septum 4 and free edges 6b, 7b of end walls 6t, 7t of shells 6, 7 should be sealed with a leaktight gasket 11 of suitably shaped polymer resin.

In order that sector A containing anode 2 should press against β-alumina sheet 4 exerting a constant pressure against it, the inventors suggest to use the pressure of the gas itself that originates in sector A, and/or a rigid structure 10 having a transverse cross-section of the smallest dimensions possible in order not to deprive the sodium of space, embedded in the sodium comprising anode 2. In the example considered here this structure is a structure of the "honeycomb" type with the axis of its cavities arranged perpendicularly to the electrolytic septum, that is sheet 4, and fixed for example to the end walls 6p of shell 6 containing the anode.

As already anticipated, the inventors have provided that an intermediate layer 8 of paraliquid or gelled material should be applied to the side of sheet 4 facing sodium anode 2, capable of reliably adhering thereto, comprising an organic polyether which is capable of stably combining with the sodium or with a mixture containing sodium and tin and/or antimony and/or bismuth and/or lead or a combination of these elements forming an alloy of the type known to those skilled in the art as "Zintl". The abovementioned organic polyether may for example be of the types described as "crown ether" or "cryptate".

The sodium can thus be stored, in solid form or contained in one of the aforesaid alloys, in equilibrium with the organic polyether in the liquid state saturated with intermediate compounds such as Sn₉, Pb₅, Na₄, Na₂, etc. In this way sodium ions can be transported to and from the anode in the solid state without this coming into direct contact with sheet 4 of β-alumina, avoiding the problems described above.

It is very simple to produce a battery having the required voltage and capacity by using several units according to the invention placed together electrically in series. It is in fact sufficient, as shown in the figure for only three units 1, 21, 31, to provide a plurality of units alongside each other with one or two of their metal walls 6p, 7p (depending upon whether a unit is the last in a series or lies between another two) also acting as walls for adjacent unit or units 21, 31. A single wall 6p, 7p thus separates the sectors of two adjacent units containing a cathode and an anode of opposite polarity respectively.

It is obvious that the shape and relative positions of the different parts making up a unit constructed according to the invention can be changed from what has been illustrated hitherto while nevertheless remaining within the scope of the teaching included in the appended claims, for example by rearranging individual units to create a monocell used as a single cell or consisting of a plurality of units connected in parallel.

## Claims

1. Sodium/metal chloride electrochemical battery unit (1) comprising an anode (2) and a cathode (3), comprising two adjacent sectors (A, C) which contain the said anode (2) and the said cathode (3) respectively separated from each other by an electrolytic septum (4) of beta alumina, the latter and the said two sectors (A, C) being enclosed within a container (5) formed from two shells (6, 7) each having at least one metal wall (6p, 7p) which is elastic under flexion located parallel to the said electrolytic septum (4) and connected substantially perpendicularly to two end walls (6t, 7t), the said electrolytic septum (4) being clamped between the free edges (6b, 7b) of the end walls (6t, 7t) of the two shells (6, 7), **characterized in that** a layer (8) of paraliquid or gelled material comprising an organic polyether which is capable of stably combining with the sodium or with an alloy containing sodium and tin and/or antimony and/or bismuth and/or lead or a combination of these forming an alloy of the "Zintl" type is applied to the side of the said β-alumina septum facing the anode (2).

2. Unit according to Claim 1, in which a leaktight gasket (11) of polymer resin is fitted in the junction zone between the said electrolytic septum (4) and the free edges (6b, 7b) of the end walls (6t, 7t) of the said shells (6, 7).

3. Unit according to any one of the foregoing claims, in which the anode (A) comprises sodium in the solid state and the cathode (C) comprises a granular nickel/nickel chloride or iron/iron chloride matrix, sintered in such a way as to be porous, the pores of which are filled with NaAlCl₄ kept in the liquid state.

4. Unit according to Claim 3 in which the said NaAlCl₄ is mixed with a solvent capable of reducing its melting point.

5. Unit according to any one of Claims 3 or 4, **characterized in that** a rigid structure (10), embedded in the sodium itself and pressing against the said electrolytic septum (4), is fixed in the sector (A) containing the sodium.

6. Unit according to Claim 5, in which the said rigid structure (10) is of the honeycomb type, is fixed to the shell (6) containing the anode (2) and has the axis of its cavities arranged perpendicularly to the electrolytic septum (4).

7. Unit according to one of claim 3 or 4, **characterized in that** that the electrolytic septum (4) is pressed with a pre-fixed force against the nickel/nickel chloride or iron/iron chloride cathode (3) by effect of the pressure exerted by the gas that originates in the said sector (A) comprising the anode (2).

8. Unit according to any one of the foregoing claims, connected in series to one or two identical units (21, 31) flanking it, **characterized in that** one or two of its said metal walls (6p, 7p) also act as walls for the aforesaid unit or units (21, 31), thus separating sectors of two adjacent units (1, 21 and 1, 31) having polarities of opposite sign.

## Patentansprüche

1. Elektrochemische Natrium/Metallchlorid-Batterieeinheit (1) mit einer Anode (2) und einer Kathode (3), umfassend zwei benachbarte Sektoren (A, C), die die Anode (2) bzw. die Kathode (3), die voneinander durch ein elektrolytisches Septum (4) aus beta-Aluminiumoxid getrennt sind, enthalten, wobei das Septum und die beiden Sektoren (A, C) in einem Behälter (5) eingeschlossen sind, der aus zwei Schalen (6, 7) gebildet ist, die jeweils mindestens eine Metallwand (6p, 7p) aufweisen, die bei Biegung elastisch ist, parallel zum elektrolytischen Septum (4) angeordnet ist und mit zwei Endwänden (6t, 7t) im wesentlichen senkrecht verbunden ist, wobei das elektrolytische Septum (4) zwischen den freien Rändern (6b, 7b) der Endwände (6t, 7t) der beiden Schalen (6, 7) festgeklemmt ist, **dadurch gekennzeichnet, dass** eine Schicht (8) aus einem paraliquiden oder gelierten Material, das einen organischen Polyether umfasst, der mit dem Natrium oder mit einer Legierung, die Natrium und Zinn und/oder Antimon und/oder Wismuth und/oder Blei oder einer Kombination dieser Metalle, die eine Legierung vom "Zintl"-Typ bilden, enthält, in stabiler Weise vereinigt werden kann, auf die Seite des β-Aluminiumoxid-Septums, das der Anode (2) zugewandt ist, aufgebracht ist.

2. Einheit nach Anspruch 1, bei der eine leckagedichte Dichtung (11) aus einem polymeren Harz in die Verbindungszone zwischen dem elektrolytischen Septum (4) und den freien Rändern (6b, 7b) der Endwände (6t, 7t) der Schalen (6, 7) eingepasst ist.

3. Einheit nach einem der vorstehenden Ansprüche, bei der die Anode (A) Natrium in festem Zustand umfasst und die Kathode (C) eine granulierte Nickel/Nickelchlorid- oder Eisen/Eisenchlorid-Matrix umfasst, die so gesintert ist, dass sie porös ist, wobei die Poren mit NaAlCl₄, das in flüssigem Zustand gehalten wird, gefüllt sind.

4. Einheit nach Anspruch 3, wobei das NaAlCl₄ mit einem Lösungsmittel, das zur Verringerung von dessen Schmelzpunkt geeignet ist, vermischt ist.

5. Einheit nach einem der Ansprüche 3 oder 4, **dadurch gekennzeichnet, dass** eine starre Struktur (10), die in das Natrium selbst eingebettet ist und gegen das elektrolytische Septum (4) drückt, im Sektor (A), der das Natrium enthält, fixiert ist.

6. Einheit nach Anspruch 5, bei der die starre Struktur (10) vom Bienenwaben-Typ ist, an der Schale (6), die die Anode (2) enthält, fixiert ist und in seiner Hohlraumachse senkrecht zum elektrolytischen Septum (4) angeordnet ist.

7. Einheit nach einem der Ansprüche 3 oder 4, **dadurch gekennzeichnet, dass** das elektrolytische Septum (4) mit einer vorfixierten Kraft gegen die Nickel/Nickelchlorid- oder Eisen/Eisenchlorid-Kathode (3) gedrückt ist, und zwar durch den Druck, der durch das Gas, das in dem die Anode (2) enthaltenden Sektor (A) entsteht, ausgeübt wird.

8. Einheit nach einem der vorstehenden Ansprüche, in Serie mit einer oder zwei identischen, flankierenden Einheiten (21, 31) verbunden, **dadurch gekennzeichnet, dass** eine oder zwei der Metallwände, (6p, 7p) auch als Wände für die vorgenannte(n) Einheit(en) (21, 31) wirken können und dabei Sektoren von zwei benachbarten Einheiten (1, 21 und 1, 31) mit Polaritäten mit entgegengesetztem Vorzeichen trennen.

## Revendications

1. Unité de batterie électrochimique au sodium/chlorure de métal (1) comportant une anode (2) et une cathode (3), comprenant deux secteurs adjacents (A, C) qui contiennent ladite anode (2) et ladite cathode (3) respectivement, séparés l'un de l'autre par une membrane électrolytique (4) en β-alumine, cette dernière et lesdits deux secteurs (A, C) étant enfermés dans un récipient (5) formé de deux enveloppes (6', 7) ayant chacune au moins une paroi métallique (6p, 7p) qui est élastique à la flexion, située parallèlement à ladite membrane électrolytique (4) et reliée sensiblement perpendiculairement à deux parois d'extrémité (6t, 7t), ladite membrane électrolytique (4) étant calée entre les bords libres (6b, 7b) des parois d'extrémité (6t, 7t) des deux enveloppes (6, 7), **caractérisée en ce qu'**une couche (8) de matière paraliquide ou gélifiée, comprenant un polyéther organique qui est capable de se combiner dé façon stable avec le sodium ou avec un alliage contenant du sodium et de l'étain et/ou de l'antimoine et/ou du bismuth et/ou du plomb ou une combinaison de ces matières formant un alliage du type "Zintl", est appliquée sur la face de ladite membrane en β-alumine orientée vers l'anode (2).

2. Unité selon la revendication 1, dans laquelle un joint étanche (11) en résine polymère est logé dans la zone de jonction entre ladite membrane électrolytique (4) et les bords libres (6b, 7b) des parois d'extrémité (6t, 7t) desdites enveloppes (6, 7).

3. Unité selon l'une quelconque des revendications précédentes, dans laquelle l'anode (A) comprend du sodium à l'état solide et la cathode (C) comprend une matrice granulaire de nickel/chlorure de nickel ou de fer/chlorure de fer, frittée de façon à être poreuse, dont les pores sont remplis de NaAlCl₄, maintenu à l'état liquide.

4. Unité selon la revendication 3, dans laquelle ledit NaAlCl₄ est mélangé à un solvant capable de réduire son point de fusion.

5. Unité selon l'une quelconque des revendications 3 et 4, **caractérisée en ce qu'**une structure rigide (10), noyée dans le sodium même et exerçant une pression contre ladite membrane électrolytique (4), est fixée dans le secteur (A) contenant le sodium.

6. Unité selon la revendication 5, dans laquelle ladite structure rigide (10) est de type en nid d'abeille et est fixée à l'enveloppe (6) contenant l'anode (2), l'axe de ses cavités étant orienté perpendiculairement à la membrane électrolytique (4).

7. Unité selon l'une des revendications 3 et 4, **caractérisée en ce que** la membrane électrolytique (4) est pressée avec une force prédéfinie contre la cathode de nickel/chlorure de nickel ou de fer/chlorure de fer (3) sous l'effet de la pression exercée par le gaz qui se dégage dans ledit secteur (A) comprenant l'anode (2).

8. Unité selon l'une quelconque des revendications précédentes, connectée en série à une ou deux unités identiques (21, 31) adjacentes, **caractérisée en ce que** une ou deux de ses parois métalliques (6p, 7p) servent aussi de parois pour la ou les unités susmentionnées (21, 31), séparant ainsi des secteurs de deux unités adjacentes (1, 21 et 1, 31) ayant des polarités de signe opposé.
